Europäisches Patentamt

European Patent Office

Office européen des brevets

(19)

(11) Veröffentlichungsnummer : **0 163 198**
**B1**

(12)   EUROPÄISCHE PATENTSCHRIFT

(45) Veröffentlichungstag der Patentschrift :
11.11.87

(51) Int. Cl.⁴ : **F 02 M 69/08// F02D41/00**

(21) Anmeldenummer : 85105935.2

(22) Anmeldetag : 14.05.85

(54) Verfahren zur kontinuierlichen Kraftstoffeinspritzung und Einrichtung zur Durchführung des Verfahrens.

(30) Priorität : 29.05.84 DE 3420029

(43) Veröffentlichungstag der Anmeldung :
04.12.85 Patentblatt 85/49

(45) Bekanntmachung des Hinweises auf die Patenterteilung : 11.11.87 Patentblatt 87/46

(84) Benannte Vertragsstaaten :
DE FR GB IT

(56) Entgegenhaltungen :
DE-A- 2 838 893
FR-E-    81 277
US-A- 4 465 050

(73) Patentinhaber : VOLKSWAGEN AKTIENGESELLS-CHAFT

D-3180 Wolfsburg (DE)

(72) Erfinder : Emmenthal, Klaus-Dieter, Dr.-Ing.
Breslauer Strasse 271
D-3180 Wolfsburg 1 (DE)
Erfinder : Pickert, Detlef
Stendaler Strasse 11
D-3180 Wolfsburg 11 (DE)
Erfinder : Wehling, Wolfgang
Sielkamp 12b
D-3300 Braunschweig (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur kontinuierlichen Einspritzung eines aus Kraftstoff und Trägerluft bestehenden Kraftstoff-Luft-Gemisches in die Ansaugleitung einer Brennkraftmaschine gemäß dem Oberbegriff des Patentanspruchs 1 sowie auf eine Einrichtung zur Durchführung des Verfahrens.

Kraftstoffeinspritzeinrichtungen, die nach dem im Oberbegriff des Patentanspruchs angegebenen Prinzip arbeiten, sind beispielsweise aus der DE-A-29 20 636 und der DE-A-32 22 000 bekannt. Bei diesen Kraftstoffeinspritzeinrichtungen wird der Kraftstoff nicht direkt in die zu den Zylindern der Brennkraftmaschine führenden Ansaugrohre, sondern zunächst in einen aus der Ausaugleitung abgezweigten, von einer Luftpumpe geförderten Teilluftstrom eingespritzt. Das dabei entstehende Gemisch aus Kraftstoff und Trägerluft wird dann auf einzelne, den Zylindern der Brennkraftmaschine zugeordnete Einspritzleitungen aufgeteilt, die in die Saugrohre der Brennkraftmaschine kurz vor den Einlaßventilen der Zylinder einmünden. Der Vorteil einer solchen bekannten Kraftstoffeinspritzeinrichtung besteht darin, daß zur Einspritzung des unter Druck stehenden Kraftstoff-Luft-Gemisches in die den einzelnen Zylindern der Brennkraftmaschine zugeordneten Saugrohre keine Einspritzdüsen wie bei herkömmlichen Kraftstoffeinspritzeinrichtungen benötigt werden, da das unter Druck stehende Gemisch auch bei kleinen Mengen mit dem Eintritt in die Saugrohre expandiert und dabei fein verteilt und versprüht wird. Bei dieser Expansion tritt zudem eine zumindest teilweise Verdampfung des in dem Kraftstoff-Luft-Gemisch enthaltenen flüssigen Kraftstoffes auf, so daß die Aufbereitung des Kraftstoffes weiter verbessert wird.

Bei derartigen Kraftstoffeinspritzeinrichtungen können sich jedoch unter bestimmten Umständen, insbesondere im Anschluß an Schubbetrieb-szuständen des Fahrzeugs, in denen bei geschlossener Drosselklappe das Fahrzeug nicht vom Motor, sondern von der kinetischen Energie der Wagenmasse angetrieben wird, Schwierigkeiten im Ansprechverhalten der Brennkraftmaschine ergeben. Diese Schwierigkeiten resultieren daher, daß während solcher Schubbetriebsphasen die Kraftstoff-Dosiervorrichtung zur Reduzierung des Kraftstoffverbrauchs abgeschaltet wird, dagegen die Luftpumpe weiterläuft, so daß der gesamte in den Einspritzleitungen zwischen der Mischvorrichtung und den Einspritzstellen befindliche Kraftstoff in die Zylinder der Brennkraftmaschine weitertransportiert wird. Wenn dann nach Beendigung des Schubbetriebs über die Dosiervorrichtung wieder Kraftstoff zugeführt wird, benötigt dieser zunächst eine gewisse Zeit, um von der Zuführstelle über das Gemischleitungssystem in die Saugrohre und damit in die Zylinder zu gelangen, was zu den erwähnten Schwierigkeiten im Ansprechverhalten der Brennkraftmaschine führt.

Bei einer anderen bekannten Kraftstoffeinspritzeinrichtung (DE-A-28 38 893) wird der von einer Kraftstoffeinspritzdüse unmittelbar in die zu den einzelnen Zylindern der Brennkraftmaschine führenden Saugrohre eingespritzte Kraftstoffstrahl zumindest zeitweise von einem Luftstrom mantelförmig umgeben. Dieser Lufstrom kann dabei von einer Luftpumpe und/oder infolge einer Druckdifferenz zwischen der Einspritzstelle und der Entnahmestelle an der Ansaugleitung vor der Drosselklappe gefördert werden.

Der von der Luftpumpe geförderte Luftstrom wird dabei von einem Steuerventil in Abhängigkeit von der Belastung der Brennkraftmaschine zu der Einspritzdüse oder dem Abgassystem der Brennkraftmaschine zwecks Verbesserung der Nachverbrennung geleitet. Dabei ergibt sich, daß mit abnehmender Last die Menge der der Einspritzdüse zugeführten Luft ab- und gleichzeitig die Menge der dem Abgassystem zugeführten Luft zunimmt. Schließlich ist in der den von der Luftpumpe gelieferten Luftstrom führenden Leitung vor dem Steuerventil ein Absperrventil eingeschaltet, das im Schubbetrieb der Brennkraftmaschine geschlossen wird, um so die Luftzufuhr zu dem Abgassystem zu unterbrechen.

Die der vorliegenden Erfindung zugrundeliegende Aufgabe besteht darin, ein Verfahren zur kontinuierlichen Kraftstoffeinspritzung der im Oberbegriff des Patentanspruchs angegebenen Art vorzuschlagen, mit dem die oben erwähnten, im Zusammenhang mit einer beim Schubbetrieb vorgenommenen Abschaltung der Kraftstoffzufuhr stehenden Schwierigkeiten im Ansprechverhalten der Brennkraftmaschine vermieden werden können.

Die Lösung dieser Aufgabe ergibt sich gemäß dem Kennzeichen des Patentanspruchs 1. Durch die von der Erfindung vorgeschlagene Abschaltung des der Mischvorrichtung zugeführten Teilluftstroms im Schubbetrieb wird die Voraussetzung dafür geschaffen, daß der in den Einspritzleitungen zwischen der Kraftstoffzuführstelle und den Einspritzstellen befindliche Kraftstoff während dieses Betriebszustandes nicht in die Saugrohre weitertransportiert werden kann, sondern im wesentlichen in den Einspritzleitungen bleibt. Dies hat zur Folge, daß nach Beendigung des Schubbetriebs mit einer erneuten Kraftstoffzuführung und einer ebenfalls wieder einsetzenden Luftförderung zu der Mischvorrichtung unmittelbar und ohne wesentlichen Zeitverzug der noch in den Einspritzleitungen vorhandene Kraftstoff in die Zylinder der Brennkraftmaschine gefördert werden kann.

Dabei läßt sich die Unterbrechung der Teilluftstromförderung zur Mischvorrichtung entweder durch Anordnung eines Absperrventils in der Leitung zwischen der Luftpumpe und der Mischvorrichtung oder aber auch durch Abschaltung der Luftpumpe selbst erreichen. Bleibt die Luftpumpe zugeschaltet und wird lediglich ein beispielsweise in Abhängigkeit von der Stellung der Drosselklappe oder auch von dem in der Ansaugleitung hinter der Drosselklappe sich ergebenden Ansaugleitungsdruck gesteuertes Absperrventil verwendet. dann kann zwischen dem Absperrventil und der Luftpumpe noch ein Speicherbehälter vorgesehen werden, der so lange, wie das Absperrventil geschlossen ist, geladen wird und nach der Öffnung des Absperrventils einen erhöhten Druckimpuls zur beschleunigten Förderung des von der Dosiervorrichtung abgegebenen Kraftstoffes zu den Zylindern der Brennkraftmaschine liefert.

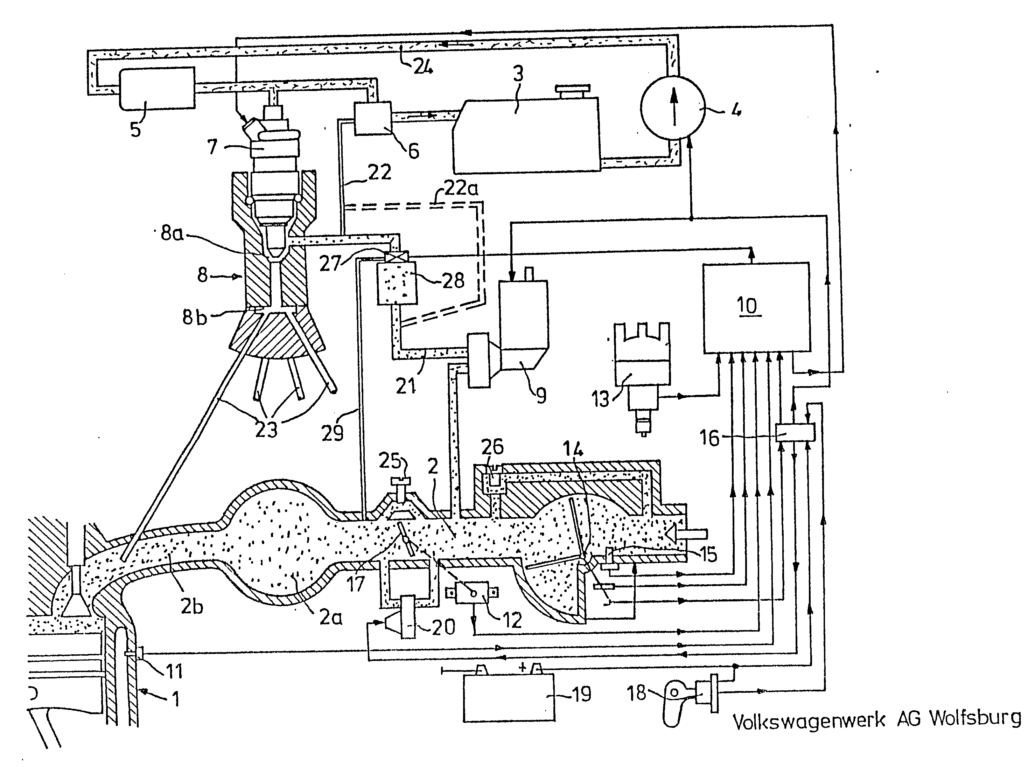

In der Zeichnung ist ein Ausfürungsbeispiel der Erfindung anhand eines schematischen Schaltbildes einer erfindungsgemäßen Kraftstoffeinspritzeinrichtung gezeigt. das im folgenden näher erläutert wird. In der Zeichnung ist mit 1 ein Teil einer herkömmlichen, beispielsweise zum Antrieb eines Kraftfahrzeugs verwendeten gemischverdichtenden Brennkraftmaschine und mit 2 ein zu dieser Brennkraftmaschine führendes Ansaugleitungssystem bezeichnet, das einen Ansaugverteiler 2a und eine Anzahl von den einzelnen Zylindern der Brennkraftmaschine 1 zugeordneten Ansaugrohren 2b aufweist.

Mit 3 ist ein Kraftstoffvorratsbehälter bezeichnet. aus dem eine Kraftstoffpumpe 4 den Kraftstoff über eine Leitung 24, in der ein Kraftstoffilter 5 vorgesehen ist, zu einer durch ein Einspritzventil 7 gebildeten Kraftstoffdosiervorrichtung fördert. Mit 6 ist ein den Kraftstoffdruck an dem Einspritzventil auf einer vorgegebenen Höhe haltender Druckregler bezeichnet, der den überschüssigen Kraftstoff in den Kraftstoffvorratsbehälter 3 zurückleitet.

Das Einspritzventil 7, das von einem Steuergerät 10 in Abhängigkeit vom Betriebszustand der Brennkraftmaschine zur Abgabe einer dem jeweiligen Betriebszustand optimal angepaßten Kraftstoffmenge angesteuert wird, übergibt den Kraftstoff in einer Gemischbildungs- und Verteilungsvorrichtung 8 an einen Förderluftstrom, der als Teilluftstrom der Ansaugleitung 2 der Brennkraftmaschine entnommen wird. Dieser Teilluftstrom wird von einer Luftpumpe 9 angesaugt und über eine Förderleitung 21 der Gemischbildungs- und Verteilungsvorrichtung 8 zugeführt.

Diese Gemischbildungs- und -verteilungsvorrichtung 8 weist einen Gemischbildungsraum 8a auf. in den das Einspritzventil 7 mit seiner Kraftstoffeinspritzdüse hineinreicht und der mit der den Teilluftstrom zuführenden Leitung 21 verbunden ist, sowie einen Gemischverteilungsraum 8b, in dem das in dem Gemischbildungsraum 8a gebildete Kraftstoff-Luft-Gemisch auf die den einzelnen Zylindern der Brennkraftmaschine zugeordneten Einspritzleitungen 23 gleichmäßig aufgeteilt wird. Die Einspritzleitungen 23 münden in die den Zylindern der Brennkraftmaschine 1 zugeordneten Ansaugrohre 2b so ein, daß das aus der Förderluft und dem Kraftstoff bestehende Gemisch in die Nähe der Einlaßventile eingesprüht wird.

Damit das Steuergerät 10 das Einspritzventil 7 in Abhängigkeit vom Betriebszustand der Brennkraftmaschine 1 steuern kann, ist es mit einer Reihe von Meßwertaufnehmern verbunden. So ist mit 11 ein Temperaturfühler angegeben, der eine charakteristische Temperatur des Zylinderblocks der Brennkraftmaschine 1 erfaßt und diese an das Steuergerät 10 weitergibt, während mit 12 ein die Stellung der in der Ansaugleitung 2 angeordneten Drosselklappe 17 erfassender Schalter angedeutet ist. 13 bezeichnet einen Zündverteiler, von dem ein der Drehzahl der Brennkraftmaschine proportionaler Meßwert erhalten wird. Weitere Meßwerte gehen dem Steuergerät 10 von einem Luftmengenmesser 14 sowie einem Temperaturfühler 15 zu, der die Temperatur der angesaugten Luft erfaßt.

Mit 16 ist eine dem Steuergerät vorgeschaltete Relaiskombination angedeutet, die bei Einschaltung des mit 18 angedeuteten Zünd-Start-Schalters des Fahrzeugs die Luftpumpe 9 ebenso wie die Kraftstoffpumpe 4 in Betrieb nimmt. Mit 20 ist ein die Drosselklappe umgebander Zusatzluftschieber in dem Ansaugsystem 2 angegeben. 19 zeigt darüberhinaus die Bordnetzbatterie des Fahrzeugs, die die elektrische Stromversorgung übernimmt. In der Zeichnung noch eingetragen sind eine Leerlaufdrehzahleinstellschraube 25 und eine Leerlaufgemischeinstellschraube 26, die beide an dem Ansaugsystem 2 vorgesehen sind.

Um nun zu verhindern, daß während des Schubbetriebs des Fahrzeugs, bei dem das Einspritzventil 7 zur Verringerung des Kraftstoffverbrauches abgeschaltet wird, die das Kraftstoff-Luft-Gemisch führenden Leitungen 23 durch die weiter fördernde Luftpumpe 9 « leergeblasen » werden, soll die Teilluftförderung zu der Gemischbildungs- und -verteilungsvorrichtung 8 während dieses Betriebszustandes erfindungsgemäß unterbrochen werden. Dazu ist in der Zeichnung ein Absperrventil 27 vorgesehen, das in der Teilluftförderleitung 21 zwischen der Luftpumpe 9 und der Gemischbildungs- und -verteilungsvorrichtung 8 eingeschaltet ist und das beispielsweise von dem Steuergerät 10, etwa in Abhängigkeit von der Stellung der Drosselklappe 17 bzw. des Drosselklappenschalters 12 oder aber in Abhängigkeit von dem sich in der Ansaugleitung 2 hinter der Drosselklappe 17 einstellenden Saugleitungsdruck steuerbar ist. Im zweiten Fall würde das Absperrventil 27 mit einer pneumatischen Stellvorrichtung ausgerüstet, die über eine Verbindungsleitung 29 mit einer Stelle der Ansaugleitung 2 stromab der Drosselklappe 17 verbunden wird.

Durch Schließen des Absperrventils 27 während des Schubbetriebs wird dafür gesorgt. daß der Luftdurchsatz durch die Gemischbildungs- und verteilungsvorrichtung 8 sowie die Einspritzleitungen 23 unterbrochen und das in diesen Leitungen befindliche Kraftstoff-Luft-Gemisch für nachfolgende Betriebszustände erhalten wird. Nach dem Öffnen des Absperrventils 27 bei Beendigung des Schubbetriebszustandes des Fahrzeugs wird die Luft- und Kraftstofförderung zu den Zylindern der Brennkraftmaschine unverzüglich und ohne wesentlichen Zeitverzug wieder aufgenommen. Die Kraftstofförderung in solchen, im Anschluß an Schubbetriebszustände sich ergebenden Betriebszuständen, die im allgemeinen Beschleunigungsvorgänge darstellen, kann noch dadurch verbessert werden, daß in der Teilluftförderleitung 21 zwischen dem Absperrventil 27 und der weiterlaufenden Luftpumpe 9 ein Speicherbehälter 28 vorgesehen wird, der bei geschlossenem Absperrventil 27 aufgeladen wird und so nach der Öffnung des Ventils für eine gewisse Zeit ein erhöhtes Förderluft-Druckniveau zur beschleunigten Kraftstofförderung zur Verfügung stellt.

Im übrigen deutet die Zeichnung an, daß eine Verbindungsleitung 22 zwischen dem Kraftstoffdruckregler 6 und der Teilluftförderleitung 21 sowohl vor oder hinter dem Speicherbehälter 28 und dem Absperrventil 27 angeschlossen sein kann, wie dies mit ausgezogenen Linien 22 bzw. mit unterbrochenen Linien 22a angedeutet ist.

Eine andere Möglichkeit zur Unterbrechung der Teilluftförderung zu der Gemischbildungs- und -verteilungsvorrichtung 8 könnte darin bestehen, bei Schubbetrieb der Brennkraftmaschine unmittelbar die Luftpumpe 9 abzuschalten. In diesem Fall wäre das zusätzliche Absperrventil 27 nicht erforderlich ; es müßte jedoch dafür gesorgt werden, daß die Luftpumpe unmittelbar nach Beendigung des Schubbetriebs wieder anläuft und daß im abgeschalteten Zustand die Teilluftförderleitung 21 auch zum Ansaugsystem hin abgesperrt bleibt.

**Patentansprüche**

1. Verfahren zur kontinuierlichen Einspritzung eines aus Kraftstoff und Trägerluft bestehenden Kraftstoff-Luft-Gemisches in die Ansaugleitung einer Brennkraftmaschine mit einer einen von der Ansaugleitung abgezweigten Teilluftstrom als Trägerluft fördernden Luftpumpe, mit einer den Kraftstoff aus einem Vorratsbehälter fördernden Kraftstoffpumpe sowie mit einer von einem Steuergerät gesteuerten Dosiervorrichtung, die den Kraftstoff in Abhängigkeit vom Betriebszustand der Brennkraftmaschine in einer Mischvorrichtung der Trägerluft zumißt, und mit einem Leitungssystem zur Förderung des in der Mischvorrichtung gebildeten Kraftstoff-Luft-Gemisches zu den Einspritzstellen der Ansaugleitung, dadurch gekennzeichnet, daß der der Mischvorrichtung zugeführte Teilluftstrom im Schubbetrieb der Brennkraftmaschine bei abgeschalteter Dosiervorrichtung abgeschaltet wird und in allen übrigen Betriebszuständen voll zugeschaltet ist.

2. Verfahren nach Anspruch 1, dadurch gekennzeichnet, daß die Luftpumpe (9) abgeschaltet wird.

3. Verfahren nach Anspruch 1, dadurch gekennzeichnet, daß ein in einer den Teilluftstrom von der Luftpumpe zu der Mischvorrichtung führenden Leitung angeordnetes Absperrventil geschlossen wird.

4. Verfahren nach Anspruch 3, dadurch gekennzeichnet, daß das Absperrventil in Abhängigkeit von der Stellung der Drosselklappe geschlossen wird.

5. Verfahren nach Anspruch 3, dadurch gekennzeichnet, daß das Absperrventil in Abhängigkeit von dem in der Ansaugleitung hinter der Drosselklappe anstehenden Druck geschlossen wird.

6. Einrichtung zur kontinuierlichen Einspritzung eines aus Kraftstoff und Trägerluft bestehenden Kraftstoff-Luft-Gemisches in die Ansaugleitung (2) einer Brennkraftmaschine (1) mit einer einen von der Ansaugleitung (2) abgezweigten Teilluftstrom als Trägerluft fördernden Luftpumpe (9), mit einer den Kraftstoff aus einem Vorratsbehälter fördernden Kraftstoffpumpe (4) sowie mit einer von einem Steuergerät (10) gesteuerten Dosiervorrichtung (7), die den Kraftstoff in Abhängigkeit vom Betriebszustand der Brennkraftmaschine (1) in einer Mischvorrichtung (8) der Trägerluft zumißt, und mit einem Leitungssystem (23) zur Förderung des in der Mischvorrichtung (8) gebildeten Kraftstoff-Luft-Gemisches zu den Einspritzstellen der Ansaugleitung zur Durchführung des Verfahrens nach Anspruch 3, dadurch gekennzeichnet, daß in einer den Teilluftstrom von der Luftpumpe (9) zu der Mischvorrichtung (8) führenden Leitung (21) ein im Schubbetrieb abschließbares Absperrventil (27) angeordnet ist und in der den Teilluftstrom führenden Leitung (21) zwischen dem Absperrventil (27) und der Luftpumpe (9) ein Speicherbehälter (28) vorgesehen ist.

**Claims**

1. A method of continuous injection of a fuel/air mixture, comprising fuel and carrier air, into the intake line of an internal combustion engine having an air pump supplying carrier air in the form of a partial air flow diverted from the intake line, a fuel pump supplying fuel from a reservoir, and a metering device governed by a control device to meter the fuel to the carrier air in a mixing device dependent upon the operating condition of the internal combustion engine, and a system of lines for delivering the fuel/air mixture formed in the mixing device to the points of injection in the intake line, characterised in that the partial air flow fed to the mixing device is disconnected when the internal combustion engine is in overrun operation and the metering device is switched off, and is connected thereto in all other operating conditions.

2. A method as claimed in claim 1, characterised in that the air pump (9) is switched off.

3. A method as claimed in claim 1, characterised in that a shutoff valve, which is disposed in a line leading the partial air flow from the air pump to the mixing device, is closed.

4. A method as claimed in claim 3, characterised in that the shutoff valve is closed in dependence upon the position of the throttle valve.

5. A method as claimed in claim 3, characterised in that the shutoff valve is closed in dependence upon the pressure in the intake line beyond the throttle valve.

6. A device for the continuous injection of a fuel/air mixture, comprising fuel and carrier air, into the intake line (2) of an internal combustion engine (1) having an air pump (9) supplying carrier air in the form of a partial air flow diverted from the intake line (2), a fuel pump (4) supplying fuel from a reservoir, and a metering device (7) governed by a control device (10) to meter the fuel to the carrier air in a mixing device (8) dependent upon the operating condition of the internal combustion engine, and a system of lines (23) for delivering the fuel/air mixture formed in the mixing device (8) to the points of injection in the intake line to carry out the method according to claim 3, characterised in that a shutoff valve (27) is disposed in a line (21) feeding the partial air flow from the air pump (9) to the mixing device (8), and can be closed during overrun operation, and a reservoir container (28) is provided in the line (21) supplying the partial air flow between the shutoff valve (27) and air pump (9).

**Revendications**

1. Procédé d'injection continue, dans le conduit d'aspiration d'un moteur à combustion interne, d'un mélange air-carburant constitué par du carburant et par de l'air porteur, comprenant une pompe à air qui refoule, en tant qu'air porteur, un courant d'air partiel dérivé du conduit d'aspiration ; une pompe à carburant qui refoule le carburant à partir d'un réservoir ; un dispositif doseur qui est commandé par un appareil de commande et qui ajoute de manière dosée le carburant à l'air porteur, dans un dispositif mélangeur, en fonction de la condition de fonctionnement du moteur à combustion interne ; ainsi qu'un système de conduits pour acheminer, vers les zones d'injection du conduit d'aspiration, le mélange air-carburant formé dans le dispositif mélangeur, caractérisé par le fait que le courant d'air partiel délivré au dispositif mélangeur est interrompu en mode poussée du moteur à combustion interne, lorsque le dispositif doseur est hors fonction, et est délivré à plein dans toutes les autres conditions de fonctionnement.

2. Procédé selon la revendication 1, caractérisé par le fait que la pompe à air (9) est mise hors fonction.

3. Procédé selon la revendication 1, caractérisé par le fait qu'une valve d'isolement, disposée dans un conduit guidant le courant d'air partiel de la pompe à air au dispositif mélangeur, est fermée.

4. Procédé selon la revendication 3, caractérisé par le fait que la valve d'isolement est fermée en fonction de la position du papillon d'étranglement.

5. Procédé selon la revendication 3, caractérisé par le fait que la valve d'isolement est fermée en fonction de la pression régnant, dans le conduit d'aspiration, derrière le papillon d'étranglement.

6. Dispositif d'injection continue, dans le conduit d'aspiration (2) d'un moteur à combustion interne (1), d'un mélange air-carburant constitué par du carburant et par de l'air porteur, comprenant une pompe à air (9) qui refoule, en tant qu'air porteur, un courant d'air partiel dérivé du conduit d'aspiration (2) ; une pompe à carburant (4) qui refoule le carburant à partir d'un réservoir ; un dispositif doseur (7) qui est commandé par un appareil de commande (10) et qui ajoute de manière dosée le carburant à l'air porteur, dans un dispositif mélangeur (8), en fonction de la condition de fonctionnement du moteur à combustion interne (1) ; ainsi qu'un système de conduits (23) pour acheminer, vers les zones d'injection du conduit d'aspiration, le mélange air-carburant formé dans le dispositif mélangeur (8), pour la mise en œuvre du procédé selon la revendication 3, caractérisé par le fait qu'une valve d'isolement (27) pouvant être fermée en mode poussée est disposée dans un conduit (21) guidant le courant d'air partiel de la pompe à air (9) au dispositif mélangeur (8), un réservoir d'accumulation (28) étant prévu, dans le conduit (21) guidant le courant d'air partiel, entre la valve d'isolement (27) et la pompe à air (9).

Volkswagenwerk AG Wolfsburg

0 163 198